# EUROPEAN PATENT APPLICATION

(11) **EP 1 605 352 A2**
(43) Date of publication of application: **14.12.2005**
(21) Application number: 05010065.0
(22) Date of filing: 09.05.2005
(51) Int. Cl.: G06F 9/445

(54) **Locating environment variables in non-volatile memory**

(30) Priority: 07.06.2004 US 862249
(71) Applicant: Hewlett-Packard Development Company, L.P., Houston, TX 77070 (US)
(72) Inventor: Wisecup, George D., Houston, Texas 77070 (US); Cepulis, Darren J., Houston, Texas 77007 (US); Bodner, James T., Houston, Texas 77079 (US); Yang, Fan, Spring, Texas 77379 (US)
(74) Representative: Schoppe, Fritz

(57) **Abstract**

In accordance with at least some embodiments of the invention, a system (100) comprises a processor (110), a non-volatile memory (118) coupled to the processor (110) and containing one or more environment variables (202) that preserve the configuration of the system (100), and a system read-only memory (ROM) (116) coupled to the processor (110). The system ROM (116) contains boot firmware (502) and a table (504) that identifies the location of the one or more environment variables (202) in the non-volatile memory (118).

## Description

### BACKGROUND

Computer systems may comprise multiple types of memory, some of which may be non-volatile memory, such as non-volatile random access memory (NVRAM). The non-volatile memory may store environment variables that define the configuration of components in the computer system, such as the baud rate of a network interface. In some computer systems, the environment variables are stored in multiple non-volatile memory units. Each environment variable is associated with a name, value, and length in the non-volatile memory unit. As such, a large amount of non-volatile memory may be needed to store the environment variables. In addition, some software applications may be unable to access the multiple non-volatile memory units that store the environment variables.

### BRIEF SUMMARY

At least some of these issues are addressed by a computer-implemented method and system for locating environment variables in non-volatile memory. In some embodiments, the system comprises a processor, a non-volatile memory coupled to the processor and containing one or more environment variables that preserve the configuration of the computer system, and a system read-only memory (ROM) coupled to the processor. The system ROM contains boot firmware and a table that identifies the location of the one or more environment variables in the non-volatile memory.

### BRIEF DESCRIPTION OF THE DRAWINGS

For a detailed description of exemplary embodiments of the invention, reference will now be made to the accompanying drawings in which:

Figure 1A shows a system configured in accordance with embodiments of the invention;

Figure 1 B shows a non-volatile memory configured in accordance with embodiments of the invention;

Figure 2A shows the contents of the non-volatile memory of Figure 1 in accordance with embodiments of the invention;

Figure 2B shows the contents of the non-volatile memory of Figure 1 in accordance with alternative embodiments of the invention;

Figure 3A shows the contents of the system ROM of Figure 1 in accordance with embodiments of the invention;

Figure 3B shows the contents of the system ROM of Figure 1 in accordance with alternative embodiments of the invention;

Figure 4 shows an exemplary procedure for accessing an environment variable in accordance with embodiments of the invention; and

Figure 5 shows the interaction between components of the system in Figure 1 in accordance with embodiments of the invention.

### NOTATION AND NOMENCLATURE

Certain terms are used throughout the following description and claims to refer to particular system components. As one skilled in the art will appreciate, computer companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...." Also, the term "couple" or "couples" is intended to mean either an indirect or direct electrical connection. Thus, if a first device couples to a second device, that connection may be through a direct electrical connection, or through an indirect electrical connection via other devices and connections.

The term "non-volatile memory" is intended to encompass all types of non-volatile memory, such as non-volatile random access memory (NVRAM), erasable programmable read-only memory (EPROM), electronically erasable read-only memory (EEPROM), and battery backed complementary metal oxide semiconductor (BBCMOS) memory. In addition, the term "environment variable" refers to binary data that preserves the configuration of a computer system.

### DETAILED DESCRIPTION

The following discussion is directed to various embodiments of the invention. Although one or more of these embodiments may be preferred, the embodiments disclosed should not be interpreted, or otherwise used, as limiting the scope of the disclosure, including the claims. In addition, one skilled in the art will understand that the following description has broad application, and the discussion of any embodiment is meant only to be exemplary of that embodiment, and not intended to intimate that the scope of the disclosure, including the claims, is limited to that embodiment.

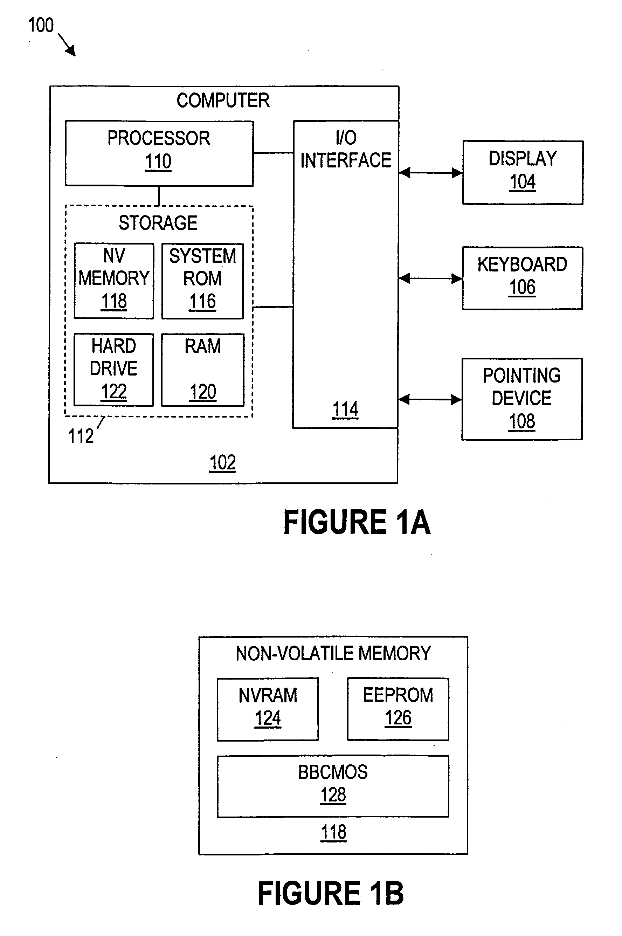

Figure 1A shows a system configured in accordance with embodiments of the invention. As shown, the system 100 comprises a computer 102 coupled to one or more input/output (I/O) devices, such as a display 104, a keyboard 106, and a pointing device 108. The computer 102 comprises a processor 110, one or more storage devices 112 (referred to as "storage"), and an I/O interface 114. The I/O interface 114 facilitates the exchange of data between the I/O devices 104, 106, and 108 and the computer 102. The storage 112 may comprise any type of volatile or non-volatile storage, such as system read-only memory (ROM) 116, non-volatile memory 118 (referred to as "NV memory"), random access memory (RAM) 120, and a hard drive 122. The non-volatile memory 118 may comprise any type of non-volatile memory, such as non-volatile random access memory (NVRAM), erasable programmable read-only memory (EPROM), electronically erasable read-only memory (EEPROM), and battery backed complementary metal oxide semiconductor (BBCMOS) memory. Although not specifically shown, the storage 112 may store an operating system (OS), such as Microsoft® Windows, UNIX, and Solaris, that is executed by the processor 110. The operating system provides a user with an interface to the system 100. Other hardware devices, such as memory controllers, graphics accelerators, and network interfaces, may be included as desired. The system 100 may be representative of, or adapted to, a desktop, a laptop, a server, or any other type of computer system.

Figure 1 B shows a configuration of the non-volatile memory 118 in accordance with at least one embodiment of the invention. The non-volatile memory 118 comprises a non-volatile random access memory (NVRAM) unit 124, an electronically erasable read-only memory (EEPROM) unit 126, and a battery backed complementary metal oxide semiconductor (BBCMOS) memory unit 128. The memory units 124, 126, and 128 may be any size desired.

The computer 102 may access the non-volatile memory 118 through a memory subsystem (not specifically shown). For example, the non-volatile memory 118 may be accessible through a memory sub-system that comprises an inter-IC (I²C) bus. Each memory unit 124, 126, and 128 associated with the non-volatile memory 118 may coupled to the bus and assigned a unique bus identifier. The respective bus identifiers may be used to access each of the memory units 124, 126, and 128.

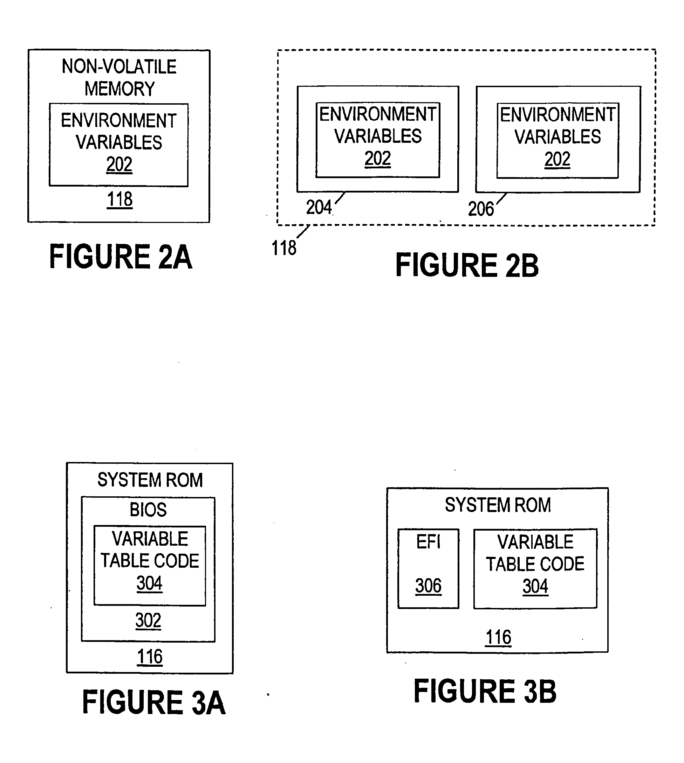

Figure 2A shows at least some of the contents of the non-volatile memory 118 in accordance with at least one embodiment of the invention. The non-volatile memory 118 comprises environment variables 202 that are associated with the configuration of the components in the system 100. The environment variables 202 may comprise binary data that is used to preserve the state of the system 100 when powered off. Such data may represent serial numbers, data used in conjunction with a management information base (MIB), and other data used by components of the system 100 to preserve their configuration and state.

Figure 2B shows an alternative configuration of the non-volatile memory 118. In this alternative configuration, the environment variables 202 reside in two or more distinct portions 204 and 206 of the non-volatile memory 118. Portions 204 and 206 may comprise separate non-volatile memory units. Thus, the environment variables 202 may be stored in a plurality of distinct non-volatile memory units, such as a BBCMOS memory unit and an EEPROM memory unit.

Figure 3A shows at least some of the contents of the system ROM 116 in accordance with at least one embodiment of the invention. The system ROM 116 comprises a basic input output system (BIOS) 302. The BIOS 302 may comprise a basic set of software routines that are used to operate and boot the computer 102. The boot process may initialize components of the computer 102 and perform self-diagnostics, such as the power-on self test (POST). The software routines may be capable of directly accessing and operating the components of the system 100, such as the hard disk drive 122, the display 104, and the keyboard 106.

The BIOS 302 contains variable table code 304 that sets up and initializes a variable table during the boot process. When the variable table code 304 is executed by the processor 110, a variable table is loaded into a memory, such as the RAM 120. Table 1 illustrates an exemplary layout of a variable table.

**Table 1:**

| **Exemplary Variable Table Layout** | | |
|---|---|---|
| **Offset** | **Size** | **Description** |
| 00h | 7 bytes | Variable Name |
| 07h | 1 byte | Bit Offset |
| 08h | 2 bytes | Byte Offset |
| 0Ah | 1 byte | Memory Type |

The exemplary layout comprises the following four fields for each environment variable: a variable name, a bit offset, a byte offset, and a storage type. The memory type field identifies the type of non-volatile memory 118 that contains the environment variable identified by the variable name field. A non-exhaustive list of memory types may be NVRAM, BBCMOS memory, EPROM, and EEPROM. The byte offset and bit offset fields contain the location of an environment variable identified by the variable name field in the non-volatile memory identified by the memory type field. Thus, the variable table may be used by the BIOS 302 to locate the environment variables 202 in the non-volatile memory 118. As previously discussed, the non-volatile memory may comprise multiple memory units, each unit being assigned a unique bus identifier. The memory type field may be associated with the bus identifier so that the appropriate memory unit is accessed for each environment variable. The variable table may contain more, less, and/or different fields for each environment variable. For example, a length field may be added to represent the length of the environment variable stored in the non-volatile memory.

The variable table code 304 contains references to each environment variable. Some of the environmental variables may be defined as generic environment variables that may or may not be currently utilized. The generic environment variables act as placeholders for environment variables that may be utilized in the future. Table 2 illustrates an exemplary environment variable table create and loaded into memory after executing the variable table code 304.

**Table 2:**

| **Exemplary Variable Table** | | | | |
|---|---|---|---|---|
| **Variable Name** | **Bit Offset** | **Byte Offset** | **Memory Type** | **Size** |
| EV1 | 00h | 03h | 1 | 1 B |
| EV2 | 01h | 05h | 2 | 5B |
| GENERIC1 | 00h | 01 h | 1 | 1 B |

The exemplary environment variable table above comprises three environment variables, EV1, EV2, and GENERIC1. Two of the environment variables, namely EV1 and GENERIC1, are stored in a common memory type. The memory type field may contain a numeric identifier of the various non-volatile memory types included in the system 100. For example, "1" may represent EEPROM and "2" may represent BBCMOS memory. As previously discussed, the value in the memory type field may be associated with the bus identifier for that memory unit. The "byte offset" field may contain a numeric representation of starting byte offset into the memory type identified by the memory type field. For example, EV2 has a starting byte offset into the BBCMOS memory of 5 bytes. The "bit offset' field may contain a numeric representation of starting bit offset into the memory type and byte identified by the memory type and byte offset fields, respectively. For example, EV1 has a starting bit offset into the third byte of EEPROM of 0 bits, indicating the environment variable is stored as byte-sized data. Thus, the location of the environment variables EV1, EV2, and GENERIC1 in non-volatile memory may be determined by examining the exemplary variable table. A size field may contain the size of the environment variable in the non-volatile memory unit identified by the memory type field. For example, environment variable GENERIC1 may comprise 1 byte of the EEPROM.

Figure 3B shows an alternative configuration of the system ROM 116. In this alternative configuration, the system ROM 116 comprises an Extensible Firmware Interface (EFI) 306 and the variable table code 304. The EFI 306 provides an interface between operating systems and platform firmware. The interface comprises data tables that contain platform-related information and boot and runtime service calls that are available to the operating system and the loader of the operating system. Like the BIOS 302, the EFI 306 provides a standard environment for booting an operating system and running pre-boot applications. As such, the variable table code 304 may be configured as a pre-boot EFI application. The pre-boot application may be written in any programming language, such as C or assembly, supported by the EFI specification. The variable table code 304 may create a variable table that is used by the EFI 306 to locate the environment variables 202 in the non-volatile memory 118.

In both configurations (e.g., Figures 3A and 3B), the variable table code 304 is stored in the system ROM 116 and executed by the processor 110 while the boot firmware has control of the system 100. By executing the variable table code 304, a corresponding variable table is loaded into memory, such as the RAM 120. In Figure 3A the boot firmware is the BIOS 302, while in Figure 3B the boot firmware is the EFI 306. Once the variable table is loaded, software, device drivers, and other components executed by the processor 110 may access the environment variables 202 by way of the variable table, which contains the location of each environment variable in the non-volatile memory 118. In at least some embodiments, the variable table code 304 may utilize information from a volatile memory source, such as a system management basic input output system (SMBIOS) table that is stored in volatile memory, to create the variable table.

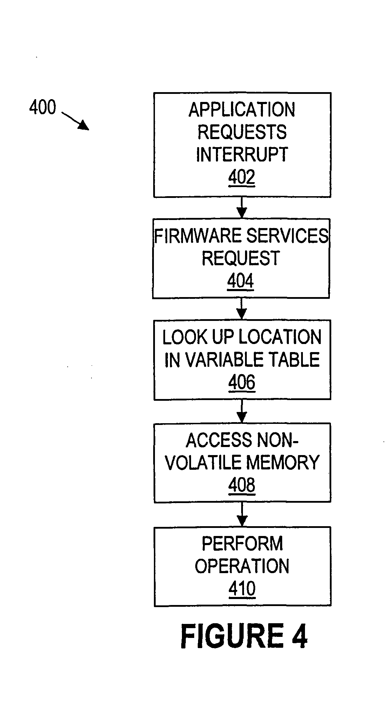

Figure 4 shows an exemplary procedure 400 for reading and writing an environment variable in accordance with various embodiments of the invention. The procedure 400 may begin when an application requests an interrupt (e.g., INT 0x15) to access a particular environment variable (block 402). The firmware may service the interrupt (block 404) by accessing the variable table and locating the requested environment variable in the variable table (block 406). As previously discussed, the variable table provides the location (e.g., storage type, byte offset, and bit offset) of the environment variable in the non-volatile memory 118. Using the location obtained from the variable table, the non-volatile memory 118 may be accessed (block 408) and the appropriate operation (e.g., a read or write) may be performed on the requested environment variable (block 410). As previously discussed, the non-volatile memory 118 may be attached to a bus, such as an fC bus. As can be appreciated by one of ordinary skill in the art, steps may be added or removed as desired. For example, if the operation is a write, a data buffer containing the data to be written may be provided to the servicing routine. In addition, the application requesting the environment variable may not need to request an interrupt to access the variable table 204.

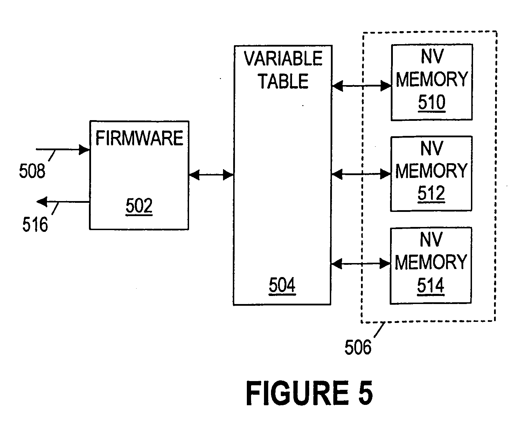

Figure 5 shows the interaction between firmware 502, a variable table 504, and a non-volatile memory 506 in accordance with at least one embodiment of the invention. A request 508 for accessing one or more environment variables may be sent to the firmware 502 (e.g., the BIOS or EFI). The firmware 502 may service the request 508 by accessing the variable table 504 and determining the location of the one or more environment variables in the non-volatile memory 506. As shown in Figure 5, the non-volatile memory 506 may comprise one or more types of non-volatile memory in separate memory units 510, 512, and 514. The operation (e.g., a read or write) associated with the request 502 may be performed on the one or more environment variables and a reply 516 may be returned from the firmware 502. If the operation is a read, the data associated with the one or more environment variables is returned as part of the reply 516. If the operation is a write, a notification representing the status of the write operation may be returned as part of the reply 516.

Embodiments of the invention provide an efficient mechanism to access environment variables stored in non-volatile memory. The variable table reduces the amount of non-volatile memory needed to store the environment variables and also reduces the amount of processing required to access the environment variables. A plurality of non-volatile memory types may concurrently store the environment variables, and the variable table and underlying structure of the non-volatile memory is transparent to the software, device driver, or other component that desires to access the environment variables.

The above discussion is meant to be illustrative of the principles and various embodiments of the present invention. Numerous variations and modifications will become apparent to those skilled in the art once the above disclosure is fully appreciated. For example, the variable table to point to a custom built routine, instead of directly pointing to a location in non-volatile memory. The custom routine may be responsible for locating the requested environment variables in the non-volatile memory. It is intended that the following claims be interpreted to embrace all such variations and modifications.

## Claims

1. A computer system (100), comprising:
a processor (110);
a non-volatile memory (118) coupled to said processor (110) and containing one or more environment variables (202) that preserve the configuration of the computer system (100); and
a system read-only memory (ROM) (116) coupled to said processor (110), the system ROM (116) contains boot firmware (502) and executable code that initializes a table (504) that identifies the location of the one or more environment variables (202) in the non-volatile memory (118).

2. The computer system (100) of claim 1 wherein the boot firmware (502) comprises a basic input output system (BIOS) (302) and the table (504) is initialized by said BIOS (302).

3. The computer system (100) of claim 1 wherein the boot firmware (502) comprises an Extensible Firmware Interface (EFI) (306) that is adapted to initialize and boot the computer system (100), and the table (504) is initialized by said EFI (306).

4. The computer system (100) of claim 1 wherein the table (504) is loaded into a memory by the executable code while the boot firmware (502) is controlling the computer system (100).

5. The computer system (100) of claim 1 wherein the table (504) contains a storage type, a starting byte offset, and a starting bit offset for each of the one or more environment variables (202).

6. The computer system of claim 1 wherein the non-volatile memory (118) comprises a plurality of non-volatile memory units (510, 512, 514), and the environment variables (202) are stored in said plurality of non-volatile memory units (510, 512, 514).

7. A method (400) implemented by a computer system, the method (400) comprising:
sending a request (402) to access a variable that is stored in non-volatile memory;
determining a location (406) of the variable in the non-volatile memory by looking up the variable in a table that is created by executable code in system read-only memory (ROM); and
accessing the variable (408) at the location determined from the table.

8. The method (400) of claim 7 wherein sending a request (402) to access a variable comprises requesting an interrupt (404) from firmware.

9. The method (400) of claim 7 wherein determining a location (406) of the environment variable comprises determining a storage type, a starting byte offset, and a starting bit offset of the environment variable in the non-volatile memory.

10. The method (400) of claim 7 further comprising sending a reply (410) in response to the request, the reply comprises the data stored at the location determined from the table.
